Europäisches Patentamt

European Patent Office

Office européen des brevets

(11) Veröffentlichungsnummer: **0 232 485 B1**

## EUROPÄISCHE PATENTSCHRIFT

(45) Veröffentlichungstag der Patentschrift: 17.04.91

(21) Anmeldenummer: 86116232.9

(22) Anmeldetag: 22.11.86

(51) Int. Cl.⁵: **F16B 13/06**, F16B 5/02, B23Q 16/00

(54) Dübel zur Lagefixierung eines Bauteils an einem Referenzteil.

(30) Priorität: 11.02.86 SE 8600599

(43) Veröffentlichungstag der Anmeldung:
19.08.87 Patentblatt 87/34

(45) Bekanntmachung des Hinweises auf die
Patenterteilung:
17.04.91 Patentblatt 91/16

(84) Benannte Vertragsstaaten:
AT BE CH DE ES FR GB GR IT LI LU NL SE

(56) Entgegenhaltungen:
EP-A- 0 089 298          AT-B- 339 687
DE-A- 1 502 047          DE-A- 2 451 832
DE-A- 3 146 005          FR-A- 907 671
GB-A- 444 623

(73) Patentinhaber: 3R Management ab
Sorterargatan 1
S-162 26 Vällingby(SE)

(72) Erfinder: Ramsbro, Börje
Bravallavägen 22
S-182 63 Djursholm(SE)

(74) Vertreter: Zinngrebe, Horst, Dr.rer.nat.
Saalbaustrasse 11
W-6100 Darmstadt(DE)

**Beschreibung**

Die Erfindung betrifft einen Dübel mit Buchse, Schraube und Spreizkegel, wobei die wenigstens über einen Teil ihrer Länge radial elastische Buchse eine zylindrische Mantelfläche sowie eine vom einsteckseitigen Ende ausgehende, konische Innenfläche aufweist, und wobei die Schraube an ihrem von der Seite des anderen Endes der Buchse her zugänglichen Kopf zur Anlage an eine in der Buchse ausgebildete, radiale Schulter radial erweitert ist, und wobei der Spreizkegel ein Gegengewinde für die Schraube aufweist und sich im Konus der Buchse erstreckt.

Aus der französischen Patentschrift 907 671 ist ein Spreizdübel zur Befestigung eines Bauteils an einer Wand bekannt, bei der der Dübel in ein Sackloch der Wand eingebracht ist und eine durch eine Druchgangsbohrung des Bauteils sich erstreckende Schraube in einen Spreizkegel eingreift, welcher durch Drehen der Schraube die Flanken des Spreizdübels gegen die Innenwand des Sackloches anpreßt. Hierbei muß der Schraubenkopf über das Bauteil nach außen vorstehen, um das Bauteil an der Wand zu befestigen, wenn die Durchgangsbohrung nicht verändert werden darf.

In der britischen Patentschrift 444 623 ist ein Dübel der eingangs genannten Art beschrieben, bei dem ein am Schaft der Schraube in Kopfnähe ausgebildeter, radial vorstehender Ring in eine radiale Ausnehmung der Buchse eingreift. Auch bei diesem Dübel wird das Bauteil zwischen Buchse und Schraubenkopf gehalten, so daß letzterer in unerwünschter Weise ebenfalls vor das Bauteil vorsteht. Dies ist im Werkzeugbau besonders dann unerwünscht, wenn die Durchgangsbohrung und das Sackloch gleiche lichte Weite haben, weil dann der Schraubenkopf entsprechend breit ausgeführt sein muß.

Der Erfindung liegt daher die Aufgabe zugrunde, einen Dübel der eingangs genannten Art zu schaffen, bei dem zur Befestigung des Bauteils an einem Referenzteil der Schraubenkopf über das Bauteil nicht vorstehen muß.

Dazu ist erfindungsgemäß vorgesehen, daß bei dem eingangs genannten Dübel der Kopf der Schraube in der Buchse axial unverschiebbar gehalten ist. Die Erfindung ermöglicht die Befestigung eines Bauteils mit einer Durchgangsbohrung an einem Referenzteil, dessen Bohrung die gleiche lichte Weite hat, wie die Durchgangsbohrung, im radialen Preßsitz, wenn der Außendurchmesser der Mantelfläche im wesentlichen gleich der lichten Weite ist. Diese Befestigung ermöglicht eine axiale Ausrichtung der Durchgangsbohrung auf die Bohrung mit einer Genauigkeit, die einige u Abweichung nicht überschreitet. Da die Schraube in der Buchse axial unbeweglich eingefangen ist, läßt sich die Verbindung zwischen Bauteil und Referenzteil durch entsprechendes Drehen der Schraube leicht herstellen und lösen. Die Genauigkeit der axialen Ausrichtung erleidet durch häufiges Herstellen und Lösen der Verbindung dabei keine Einbuße. Da der in der Buchse eingefangenen Schraubenkopf über die Mantelfläche radial nicht vorsteht, kann die Buchse zum Herstellen der Verbindung beliebig weit in die Durchgangsbohrung und Bohrung eingeführt werden, so lange jedenfalls sichergestellt bleibt, daß der radial elastische Teil der Buchse den Übergangsbereich zwischen Durchgangsbohrung und Bohrung erfaßt.

In bevorzugter Weiterbildung der Erfindung ist der Mantel der Buchse wenigstens längs des elastischen Teils aufgeschlitzt, wobei sich empfiehlt, wenn in den Mantel der Buchse mehrere erste, über den Buchsenumfang gleich beabstandete und von einer Buchsenstirnfläche ausgehende Schlitze geschnitten sind. Die radiale Elastizität der Buchse über ihre gasamte Länge wird verbessert, wenn in den Mantel der Buchse mehrere zweite, über den Buchsenumfang gleich beabstandete Schlitze geschnitten sind, welche von der gegenüberliegenden Buchsenstirnfläche ausgehen.

In einer praktischen Ausführungsform der Erfindung ist vorgesehen, daß an einer ersten Buchsenstirnfläche eine radial einwärts ragende Ringschulter ausgebildet ist, gegen welche sich der Kopf der Schraube axial auswärts abstützen kann. Vorteilhafterweise steht in der Buchse eine weitere Ringschulter radial einwärts vor, gegen welche sich der Kopf der Schraube axial einwärts abstützen kann.

Herstellen und Lösen des Preßsitzes werden in Weiterbildung der Erfindung erleichtert, wenn der Spreizkegel durch ein an seinem Konus ausgebildetes Profil im konischen Buchsenabschnitt unverdrehbar gehalten ist, etwa in der Form, daß in den Mantel der Buchse ein axialer Längsschlitz geschnitten ist, in welchen sich ein in dem Spreizkegel verankerter Radialstift erstreckt.

Ist die Bohrung im Referenzteil ein Sackloch, wird die Entnahme des erfindungsgemäßen Dübels aus dem Sackloch erleichtert, wenn der Spreizkegel gegenüber dem Gegengewinde eine Federtasche aufweist, in welcher eine sich auf dem Boden des Sacklochs abstützende Feder eingefangen ist.

Weitere bevorzugte Ausführungsformen der Erfindung sind in den abhängigegen Ansprüchen angegeben.

Die Erfindung wird nachstehend anhand des in der beigefügten Zeichnung dargestellten Ausführungsbeispiels im einzelnen beschrieben, es zeigen:

Fig. 1:      Eine Draufsicht auf eine Buchse mit Schraubenkopf;

Fig. 2: Einen Axialschnitt durch die in die Bohrungen eingesetzte Buchse längs der Linie II-II aus Fig. 1;

Fig. 3: Eine Querschnittsansicht längs der Linie III-III aus Fig. 2; und

Fig. 4: Eine der Fig. 2 ähnliche Darstellung eines weiteren Ausführungsbeispiels.

Die im ganzen mit 3 bezeichnete Buchse weist einen Mantel 23 mit zylindrischer Außenfläche auf, wobei der Buchsenkopf 21 im Bezug zu dem Mantel 23 einen etwas geringeren Durchmesser besitzt. In den Mantel 23 sind vier über den Umfang gleichbeabstandete erste Schlitze 5, 25, 26, 27 eingeschnitten, die vom Buchsenkopf 21 ausgehend sich fast über die gesamte Länge der Buchse erstrecken und kurz vor der dem Buchsenkopf 21 abgewandten Stirnfläche 24 der Buchse 3 enden. In den Mantel 23 sind vier umfangsmäßig gleich beabstandete zweite Schlitze 35, 36, 37, 38 von der Stirnfläche 24 ausgehend eingeschnitten, welche am Buchsenkopf 21 mit Abstand zu dessen Stirnfläche 22 bei 6 enden und mittig zwischen den ersten Schlitzen 5, 25, 26, 27 liegen. Vermöge der ersten und zweiten Schlitze ist wenigstens der Mantel 23 der aus Werkzeugstahl bestehenden Buchse 3 radial elastisch.

Im wesentlichen über die gesamte Länge des Mantels 23 besitzt die Buchse 3 eine konische axiale Innenbohrung 4, die sich zur Stirnfläche 24 erweitert. In den Buchsenkopf 21 ist eine zylindrische Bohrung 13 ausgehend von der vorderen Stirnfläche 22 des Buchsenkopfes 21 eingebracht, welche über eine radial einwärts vorspringende Ringschulter 29 in die konische Bohrung 4 übergeht. In die Innenwand der Bohrung 13 ist nahe der Stirnfläche 22 eine Ringnut 31 eingeschnitten, in welcher ein radial federnder Sicherungsring 14 gehalten ist.

In der zylindrischen Bohrung 13 ist der Kopf 10 einer Schraube zwischen der Ringschulter 29 und dem Sicherungsring 14 eingefangen, wobei der Kopf 10 von einem ersten, auf der Ringschulter 29 aufliegenden Stützring 12 unterfaßt ist und zwischen die gegenüber liegende freie Stirnfläche des Kopfes 10 und den Sicherungsring 14 ein zweiter Stützring 11 zwischengelegt ist. Der Kopf 10 besitzt eine sechskantige Einsenkung, in welche das sechskantige Ende eines nicht dargestellten Schraubendrehers von außen eingreifen kann.

Der vom Kopf 10 ausgehende und mit Außengewinde versehene Schaft 32 der Schraube erstreckt sich mittig in die konische Bohrung 4 und greift dort in das Innengewinde eines Sackloches 8 eines Spreizkegels 7 ein, dessen kegelige Außenwand an der Innenwand der konischen Bohrung 4 anliegt.

In der Nähe seines vom mittigen Sackloch 8 abgewandten Endes ist in dem Spreizkegel 7 ein aus ihm radial vorstehender Stift 16 im Preßsitz gehalten, welcher sich in einen axialen Längsschlitz 17 im Mantel 23 erstreckt und über dessen Außenkontur nicht vorsteht.

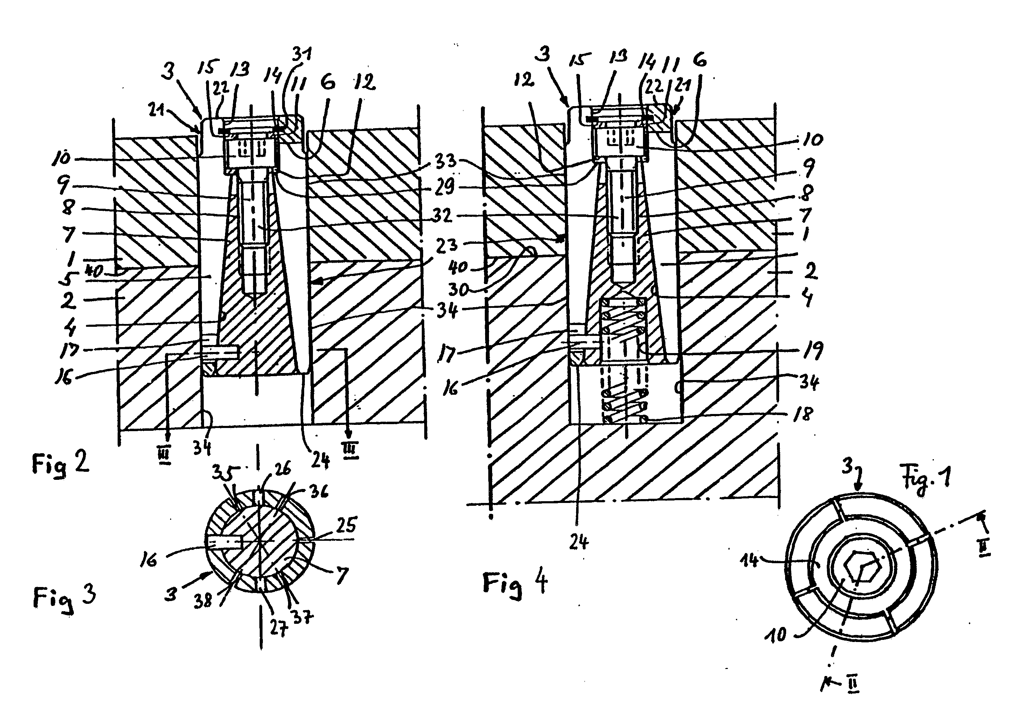

Bei der in Fig. 4 der dargestellten Ausführungsform des Spreizkegels 7 ist von seinem dem Sackloch 8 gegenüberliegenden Ende ausgehend eine Federtasche 19 als Ausnehmung eingebracht, in welcher eine Druckfeder 18 mit einem Ende gehalten ist.

Wie in Figuren 2 und 4 dargestellt dient die Buchse zur exakten Lagefixierung eines Werkstückes 1 auf einem Werkstücktisch 2, wobei das Werkstück 1 eine Durchgangsbohrung 33 und der Werkstücktisch eine Bohrung 34 besitzen. Durchgangsbohrung 33 und Bohrung 34 haben gleiche lichte Weite, und der Außendurchmesser des Mantels 23 entspricht dieser lichten Weite. Im dargestellten Anwendungsbeispiel besitzt der Werkstücktisch 2 eine plan geschliffene Oberfläche 40 und das Werkstück 1 eine entsprechend plane Auflagefläche 30. Zur Lagefixierung wird das gegenüber dem Tisch 2 zunächst frei beweglichen Werkstück 1 so auf den Tisch 2 aufgesetzt, daß die Durchgangsbohrung 33 mit der Bohrung 34 fluchtet. Sodann wird die Buchse 3 in die Durchgangsbohrung 33 und die Bohrung 34 soweit eingeführt, daß sowohl die Durchgangsbohrung 33 wie die Bohrung 34 vom Mantel 23 erfaßt werden. Mit Hilfe des erwähnten Schraubendrehers wird die Schraube 9 so gedreht, daß der Spreizkegel 7 in die konische Bohrung 4 hineingezogen wird, wobei der Kopf 10 in der Bohrung 13 zwischen den Stützscheiben 11 und 12 axial unverschieblich jedoch drehbar eingefangen bleibt. Durch das Hereinziehen des Spreizkegels 7 in die konische Bohrung 4 wird der Mantel 23 radial nach außen elastisch aufgeweitet, so daß die Buchse 3 im Preßsitz in der Durchgangsbohrung 33 und der Bohrung 34 gehalten ist, und das Werkstück 1 demzufolge exakt auf dem Tisch 2 in der Ebene der Oberfläche 40 fixiert ist.

Zum Lösen der Fixierung wird die Schraube 9 im Gegensinne gedreht, wobei aufgrund der axialen Unverschieblichkeit des Kopfes 10 der Spreizkegel 7 aus der konischen Bohrung 4 herausgetrieben wird und der Mantel 23 in seine entspannte Ausgangslage zurückkehrt. Die Buchse kann dann aus den Bohrungen 33, 34 nach unten oder oben entfernt und das Werkstück 1 vom Tisch 2 abgenommen werden.

Der im Schlitz 17 eingefangene Radialstift 16 unterstützt das Lösen des Eingriffs des Spreizkegels 7 mit der Innenwand der konischen Bohrung 4, indem er ein Mitdrehen des Spreizkegels 7 mit der Schraube 9 verhindert.

Die Druckfeder 18 wird vorteilhafterweise dann benutzt, wenn der Tisch 2 ein Sackloch als Bohrung 34 besitzt, wobei sich die Feder 18 dann auf dem Boden des Sackloches abstützt und die Buchse 3 nach dem Lösen des Preßsitzes aus der Durchgangsbohrung 33 nach oben drückt, wo sie leicht aus der Durchgangsbohrung 33 entnommen werden kann.

Die Erfindung ist auf Einzelheiten des vorstehend beschriebenen Ausführungsbeispiels nicht beschränkt. So kann zur Drehsicherung des Spreizkegels 7 dieser an seinem dem Sackloch 8 abgewandten Ende mit einer radialen Nase versehen sein, die in einen der zweiten Schlitze oder in eine entsprechend gestaltete, verlängerte Ausnehmung aus der Innenfläche der konischen Bohrung 4 eingreifen kann. Die Unverdrehbarkeit des Spreizkegels 7 ist grundsätzlich jedoch bereits dadurch gewährleistet, daß dr Kopf 10 axial unverschieblich ist und sich axial einwärts auf dem ersten Stützring 12 und axial auswärts auf dem zweiten Stützring 11, welcher vom Sicherungsring 14 hintergriffen ist, abstützt.

**Ansprüche**

1. Dübel mit Buchse (3), Schraube (9) und Spreizkegel (7), wobei die wenigstens über einen Teil (23) ihrer Länge radial elastische Buchse (3) eine zylindrische Mantelfläche sowie eine vom einsteckseitigen Ende (24) ausgehende, konische Innenfläche (4) aufweist, und wobei die Schraube (9) an ihrem von der Seite des anderen Endes der Buchse her zugänglichen Kopf (10) zur Anlage an eine in der Buchse ausgebildete radiale Schulter (29) radial erweitert ist, und wobei der Spreizkegel (7) ein Gegengewinde (8) für die Schraube (9) aufweist und sich im Konus der Buchse (3) erstreckt, dadurch gekennzeichnet, daß der Kopf (10) der Schraube (9) im Inneren der Buchse (3) axial unverschiebbar gehalten ist.

2. Dübel nach Anspruch 1, dadurch gekennzeichnet, daß der Mantel (23) der Buchse wenigstens längs des elastischen Teils aufgeschlitzt ist.

3. Dübel nach Anspruch 2, dadurch gekennzeichnet, daß in den Mantel der Buchse mehrere erste, über den Buchsenumfang gleich beabstandete und von einer Buchsenstirnfläche (24) ausgehende Schlitze (5, 25, 26, 27) geschnitten sind.

4. Dübel nach Anspruch 2 oder 3, dadurch gekennzeichnet, daß in den Mantel der Buchse mehrere zweite, über den Buchsenumfang gleich beabstandete Schlitze (35, 36, 37, 38) geschnitten sind, welche von der gegenüberliegenden Buchsenstirnfläche (22) ausgehen.

5. Dübel nach einem der vorstehenden Ansprüche, dadurch gekennzeichnet, daß an einer ersten Buchsenstirnfläche (22) eine radial einwärts ragende Ringschulter (11) ausgebildet ist, gegen welche sich der Kopf (10) axial auswärts abstützt.

6. Dübel nach einem der vorstehenden Ansprüche, dadurch gekennzeichnet, daß in der Buchse (3) eine weitere Ringschulter (29) radial einwärts vorsteht, gegen welche sich der Kopf (10) axial einwärts abstützt.

7. Dübel nach einem der Ansprüche 5 oder 6, dadurch gekennzeichnet, daß der konische Buchsenabschnitt sich zu einer der ersten Buchsenstirnfläche (22) gegenüberliegenden zweiten Buchsenstirnfläche (24) öffnet.

8. Dübel nach Anspruch 7, dadurch gekennzeichnet, daß der konische Buchsenabschnitt sich zur zweiten Buchsenstirnfläche hin erweitert.

9. Dübel nach einem der vorstehenden Ansprüche, dadurch gekennzeichnet, daß der Spreizkegel ein von einer seiner Stirnflächen ausgehendes Sackloch (8) mit dem Innengewinde aufweist.

10. Dübel nach einem der vorstehenden Ansprüche, dadurch gekennzeichnet, daß der Spreizkegel durch ein an seinem Konus ausgebildetes Profil im konischen Buchsenabschnitt unverdrehbar gehalten ist.

11. Dübel nach Anspruch 10, dadurch gekennzeichnet, daß in den Mantel der Buchse ein axialer Längsschlitz (17) geschnitten ist, in welchen sich ein in dem Spreizkegel verankerter Radialstift (16) erstreckt.

12. Dübel nach einem der vorstehenden Ansprüche, dadurch gekennzeichnet, daß der Spreizkegel gegenüber dem Gegengewinde eine Federtasche (19) aufweist.

13. Dübel nach einem der vorstehenden Ansprüche, dadurch gekennzeichnet, daß der Kopf (10) in einer zylindrischen Bohrung (13) der Buchse eingefangen ist und sich nach axial außen an einem in einer Ringnut (31) der Bohrung (13) gehaltenen Ring (11, 14) abstützt.

14. Dübel nach einem der vorstehenden Ansprüche, dadurch gekennzeichnet, daß der Kopf (10) in einer zylindrischen Bohrung (13) der Buchse eingefangen ist und sich nach axial innen an einem zweiten, gegen eine Ringschulter (29) anliegenden Stützring (12) abstützt.

15. Dübel nach einem der vorstehenden Ansprüche, dadurch gekennzeichnet, daß der die zylindrische Bohrung umgebende Buchsenkopf (21) gegenüber dem elastischen Teil der Buchse (23) radial zurückversetzt ist.

## Claims

1. A dowel with a bushing (3), a screw (9) and a spreader cone (7), the bushing (3), which is radially resilient at least over a part (23) of its length, having a cylindrical casing face, and a conical inner face (4) starting from the end (24) on the pushing-in side, and the screw (9) being radially expanded at its head (10) which is accessible from the side of the other end of the bushing, in order to rest against a radial shoulder (29) constructed in the bushing, and the spreader cone (7) having a counterthread (8) for the screw (9) and extending in the cone of the bushing (3), characterised in that the head (10) of the screw (9) is held in the interior of the bushing (3) so as to be axially undisplaceable.

2. A dowel according to Claim 1, characterised in that the casing (23) of the bushing is slit open at least along the resilient part.

3. A dowel according to Claim 2, characterised in that several first slits (5, 25, 26, 27), starting from an end face (24) of the bushing and at equal distances over the bushing periphery, are cut into the casing of the bushing.

4. A dowel according to Claim 2 or 3, characterised in that several second slits (35, 36, 37, 38), at equal distances over the bushing periphery, are cut into the casing of the bushing, which slits start from the opposite end face (22) of the bushing.

5. A dowel according to any one of the preceding claims, characterised in that a radially-inward-projecting annular shoulder (11) is constructed at a first end face (22) of the bushing, against which shoulder the head (10) is supported axially outwards.

6. A dowel according to any one of the preceding claims, characterised in that a further annular shoulder (29) protrudes radially inwards in the bushing, against which shoulder the head (10) is supported axially inwards.

7. A dowel according to either Claim 5 or Claim 6, characterised in that the conical bushing portion opens into a second bushing end face (24) opposite to the first bushing end face (22).

8. A dowel according to Claim 7, characterised in that the conical bushing portion expands towards the second bushing end face.

9. A dowel according to any one of the preceding claims, characterised in that the spreader cone has, starting from one of its end faces, a blind hole (8) with the inner thread.

10. A dowel according to any one of the preceding claims, characterized in that the spreader cone is non-twistably held in the conical bushing portion by a profil constructed at its cone.

11. A dowel according to Claim 10, characterised in that an axial longitudinal slit (17) is cut into the casing of the bushing, into which slit a radial pin (16) extends which is anchored in the spreader cone.

12. A dowel according to any one of the preceding claims, characterised in that the spreader cone has a spring pocket (19) opposite the counterthread.

13. A dowel according to any one of the preceding claims, characterised in that the head (10) is captured in a cylindrical borehole (13) of the bushing and is supported axially outwards by a ring (11, 14) held in an annular groove (31) of the borehole (13).

14. A dowel according to any one of the preceding claims, characterised in that the head (10) is captured in a cylindrical borehole (13) of the bushing and is supported axially inwards by a supporting ring (12) resting against an annular shoulder (29).

15. A dowel according to any one of the preceding claims, characterized in that the bushing head (21) surrounding the cylindrical borehole is radially set back in relation to the resilient part of the bushing (23).

## Revendications

1. Cheville avec douille (3), vis (9) et cône d'écartement (7), dans laquelle la douille (3) élastique radialement au moins sur une partie (23) de sa longueur présente une surface d'enveloppe cylindrique ainsi qu'une surface intérieure conique (4), partant de l'extrémité côté introduction (24), et dans laquelle la vis (9) est élargie radialement à sa tête (10) accessible depuis le côté de l'autre extrémité de la douille pour s'adosser à un épaulement radial (29) formé dans la douille, et dans laquelle le cône d'écartement (7) présente un contre-filetage (8) pour la vis (9) et s'étend dans le cône de la douillé (3), caractérisée en ce que la tête (10) de la vis (9) est maintenue axialement fixe dans l'intérieur de la douille (3).

2. Cheville selon la revendication 1, caractérisée en ce que l'enveloppe (23) de la douille est fendue au moins le long de la pièce élastique.

3. Cheville selon la revendication 2, caractérisée en ce que plusieurs premières fentes (5, 25, 26, 27) également espacées sur la circonférence de la douille et partant d'une face de la douille (24) sont découpées dans l'enveloppe de la douille.

4. Cheville selon la revendication 2 ou 3, caractérisée en ce que plusieurs deuxièmes fentes (35, 36, 37, 38), également espacées sur la circonférence de la douille, qui partent des faces opposées de la douille (22) sont découpées dans l'enveloppe de la douille.

5. Cheville selon l'une des revendications précédentes, caractérisée en ce qu'un épaulement circulaire (11) dépassant radialement vers l'intérieur, contre lequel la tête (10) s'appuie axialement vers l'extérieur, est formé sur une première face de la douille (22).

6. Cheville selon l'une des revendications précédentes, caractérisée en ce qu'un autre épaulement circulaire (29) est radialement en saillie dans la douille vers l'intérieur, contre lequel la tête (10) s'appuie axialement vers l'intérieur.

7. Cheville selon l'une des revendications 5 ou 6, caractérisée en ce que la section conique de la douille s'ouvre vers une deuxième face de la douille (24) opposée à la première face de la douille (22).

8. Cheville selon la revendication 7, caractérisée en ce que la section conique de la douille s'élargit vers une deuxième face de la douille.

9. Cheville selon l'une des revendications précédentes, caractérisée en ce que le cône d'écartement présente un trou borgne (8) partant d'une de ses faces avec le filetage intérieur.

10. Cheville selon l'une des revendications précédentes, caractérisée en ce que le cône d'écartement est maintenu non pivotant par un profil formé sur son cône dans la section conique de la douille.

11. Cheville selon la revendication 10, caractérisée en ce qu'une fente longitudinale axiale (17) est découpée dans l'enveloppe de la douille, dans laquelle s'étend une goupille radiale (16) ancrée dans le cône d'écartement.

12. Cheville selon l'une des revendications précédentes, caractérisée en ce que le cône d'écartement présente une poche à ressort (19) en face du contre-filetage.

13. Cheville selon l'une des revendications précédentes, caractérisée en ce que la tête (10) est prise dans un perçage cylindrique (13) de la douille et s'appuie axialement vers l'extérieur sur une bague (11, 14) maintenue dans une rainure circulaire (31) du perçage (13)

14. Cheville selon l'une des revendications précédentes, caractérisée en ce que la tête (10) est prise dans un perçage cylindrique (13) de la douille et s'appuie axialement vers l'intérieur sur une deuxième bague d'appui (12) s'adossant contre un épaulement circulaire (29).

15. Cheville selon l'une des revendications précédentes, caractérisée en ce que la tête de douille (21) entourant le perçage cylindrique 13 est décalée en arrière radialement par rapport à la partie élastique de la douille (29).

Fig 2

Fig 3

Fig 4

Fig. 1

EP 0 232 485 B1